# EUROPÄISCHE PATENTSCHRIFT

(11) **EP 2 461 972 B1**
(45) Veröffentlichungstag und Bekanntmachung des Hinweises auf die Patenterteilung: **04.12.2019**
(21) Anmeldenummer: 10747583.2
(22) Anmeldetag: 09.08.2010
(51) Int. Cl.: B32B 5/18, E04C 2/296

(54) **SCHAUMSTOFF-PANEEL**
FOAM PANEL
PANNEAU EN MOUSSE

(30) Priorität: 07.08.2009 DE 102009036541
(43) Veröffentlichungstag der Anmeldung: 13.06.2012
(73) Patentinhaber: RESOPAL GMBH, 64823 Gross-Umstadt (DE)
(72) Erfinder: TOLKSDORF, Hans-Helmut, 32791 Lage / Lippe (DE); DEMMER, Markus, 48346 Ostbevern (DE)
(74) Vertreter: Mai Dörr Besier European Patent Attorneys
(86) Internationale Anmeldenummer: PCT/EP2010/004852
(87) Internationale Veröffentlichungsnummer: WO 2011/015376

(56) Entgegenhaltungen:
- EP-A1- 1 588 814
- EP-A1- 1 938 963
- US-A- 5 352 510

## Beschreibung

Die vorliegende Erfindung betrifft ein Schaumstoff-Paneel, das einen Träger und eine auf dem Träger haftende mehrschichtige Verbundplatte umfasst. Vorzugsweise handelt es sich bei dem Paneel um eine Bodenplatte (Fußbodenpaneel). Ferner kann das Paneel aber auch eine andere Platte, wie zum Beispiel eine Tischplatte, oder ein Wandpaneel sein, auch wenn diese Anwendungsgebiete weniger im Vordergrund stehen.

Mehrschichtige Verbundplatten, auch Schichtstoffplatten oder Laminate genannt, werden heutzutage in vielen Lebensbereichen für Gebrauchs- und Dekorationszwecke verwendet. Sie finden zum Beispiel Anwendung im Innenausbau zur Verkleidung von Fenstern, Treppen und Fußböden, und bei der Beschichtung von Möbeln sowohl im privaten als auch im gewerblichen Bereich.

Mehrschichtige Verbundplatten bestehen gewöhnlich aus einer bestimmten Anzahl unterschiedlicher Papierbögen, die mit härtbaren Kunstharzen imprägniert, übereinander geschichtet und unter Hitze und hohem Druck mittels Pressplatten (oft auch als Pressbleche bezeichnet) miteinander verpresst werden. Als Kern dieser Verbundplatten dient üblicherweise eine Anordnung aus mehreren Bögen Kraftpapier, auf der in der Regel ein Bogen eines mit Mustern oder Farben versehenen Dekorpapiers angeordnet ist. Auf dem Dekorpapierbogen kann schließlich ein üblicherweise transparentes Overlay angebracht sein. Derart hergestellte mehrschichtige Verbundplatten (high pressure laminates, HPLs) werden zum Beispiel unter dem Handelsnamen Resopal vertrieben.

Mehrschichtige Verbundplatten werden oft zu Paneelen, wie zum Beispiel Bodenplatten, verarbeitet, die als Bodenbelag im Innen- oder Außenbereich von Bauwerken Verwendung finden. Die Bodenplatten dienen als permanente Tritt- und Stellfläche und sind daher hohen mechanischen Beanspruchungen ausgesetzt.

Aus diesem Grund müssen mehrschichtige Verbundplatten, gerade wenn sie zu Bodenplatten verarbeitet werden, eine hohe Widerstandsfähigkeit gegenüber mechanischer Beanspruchung, insbesondere eine hohe Abriebfestigkeit, aufweisen. In der europäischen Norm 13329, Anhang E, wird ein Test zur Bestimmung der Abriebfestigkeit von Laminatböden und die Einordnung der getesteten Laminatböden in Abriebklassen von AC1 (moderat abriebfest bei häuslicher Beanspruchung) bis AC6 (hoch abriebfest im gewerblichen Bereich) festgelegt.

Eine hohe Abriebfestigkeit von Oberflächen von Verbundplatten bzw. diese Verbundplatten aufweisenden Laminatböden wird vor allem dadurch erreicht, dass in die Verbundplatten Korundpartikel eingearbeitet werden, die von Natur aus durch eine hohe Härte gekennzeichnet sind. Die Abriebfestigkeit kann insbesondere durch die Größe und die Menge der verwendeten Korundpartikel gesteuert werden.

Beispielsweise offenbart WO 2009/080171 ein Paneel, das einen Träger und eine auf dem Träger haftende erfindungsgemäße Verbundplatte umfasst. Die Verbundplatte umfasst wiederum
a) eine Kernschicht,
b) eine Dekorschicht,
c) Partikel mit einer Mohs-Härte von wenigstens 8,
d) eine Bindemittelanordnung, in der die Kernschicht und die Dekorschicht vorgesehen sind und die eine auf der Dekorschicht angeordnete Bindemittelschicht bildet, die die Partikel enthält,
wobei
(i) die durch die Bindemittelschicht gebildete Oberfläche der Verbundplatte eine Glanzgradreduktion nach Scheuerbeanspruchung im Glanzgradreduktionstest GR500 von höchstens 7% aufweist, wobei der ursprüngliche Glanzgrad wenigstens 80 GE beträgt,
(ii) die Partikel eine mittlere Korngröße im Bereich von 5 - 100 µm aufweisen, und
(iii) die Beladung der Verbundplatte mit den Partikeln, bezogen auf die Oberfläche der Verbundplatte, im Bereich von 21 - 35 g/m² liegt.

Bevorzugte Träger sind Spanplatten, Sperrholz, Trägerplatten (gegebenenfalls mit Schichtstoff beschichtet), hochverdichtete Faserplatten, mitteldichte Faserplatten, Hartfaserplatten, Tischlerplatten, Furnierplatten, Massivholz, Waben, Schaumstoffe, Metallplatten, Bleche, mineralische Träger, Natur- und Kunststein, Fliesen und Gipskartonplatten. Die Träger können mit einem geeigneten Bindemittel, wie z. B. einem Melaminharz, beschichtet oder unbeschichtet sein. Die Verbundplatte kann sowohl auf flüssigkeitsaufnehmende (saugfähige) Träger, wie z. B. unbeschichtete Spanplatten und unbeschichtetes Holz, als auch auf nicht flüssigkeitsaufnehmende (nicht saugfähige) Träger, wie z. B. Metalle, Keramik, Glas, beschichtete Hölzer, beschichtete Spanplatten usw. aufgebracht werden.

Ein Nachteil herkömmlicher Paneele ist jedoch ihre große Wasserempfindlichkeit. So quellen insbesondere Holzmaterialien, wie z. B. Spanplatten, die in vielen Paneelen als Träger verwendet werden, um 8 % und mehr auf, mit der Folge, dass die entsprechenden Paneele nicht wasserbeständig sind.

### Weiterhin sind sie relativ schwer.

Ähnliches gilt auch für die ansonsten für feste Bodenbeläge eingesetzten hochdichten Faserplatten (auch HDF genannt), die ebenfalls nur bedingt wasserfest sind. Darüber hinaus weisen sie eine sehr hohe Dichte, üblicherweise im Bereich von 850-950 kg/m³, auf und sind deshalb noch schwerer und teurer als herkömmliche Paneele, umfassend einen Spanplattenträger.

Wood-Plastic-Composites, wie z. B. PE- oder PP-Composites, können zwar eine bessere Wasserbeständigkeit und ein geringeres Gewicht aufweisen. Jedoch sind ihre mechanischen Eigenschaften, insbesondere ihre Festigkeit und die Abhebefestigkeit der Beschichtung, sowie ihre Bearbeitbarkeit, insbesondere für Fräsen, in der Regel deutlich schlechter.

Gerade für die Anwendung sind jedoch Paneele mit guter Bearbeitbarkeit, insbesondere für Fräsen, wünschenswert, die mindestens der von Holzwerkstoffen entspricht und insbesondere das Einarbeiten von Klick-Systemen entlang der Längsseiten der Paneele erlauben. Gleichzeitig werden möglichst gute mechanische Eigenschaften, insbesondere eine hohe Festigkeit und eine gute Abhebefestigkeit gewünscht.

DE 10 2005 023 661A1 beschreibt ein dekoratives Laminat mit einer integrierten Dämpfungszwischenschicht. Ziel der Anmeldung ist es, das Geräuschsniveau in Räumen mit einer Fußbodenfläche aus Laminat zu dämpfen, insbesondere in Bereichen, wo normalerweise Schuhe verwendet werden. Die Dämpfungszwischenschicht besteht vorzugsweise aus einem elastischen Material, und weist gemäß einer Ausführungsform eine Dichte im Bereich von 450 bis 650 kg/m³ auf. Im Ausführungsbeispiel dieser Anmeldung wird die Verwendung eines Polyurethans mit einer mittleren Dichte von 625 kg/m³ veranschaulicht. Die Dicke der Dämpfungszwischenschicht soll geeigneterweise im Bereich von 0,2 bis 4 mm liegen.

Weiterhin umfasst das dekorative Laminat der DE 10 2005 023 661 A1 einen tragenden Kern, der u. a. aus Polymeren, wie Polyurethan, bestehen kann.

Die Verwendung von Polyurethan-Schaumstoff mit der vorliegend geforderten Biegefestigkeit ist der DE 10 2005 023 661A1 jedoch nicht zu entnehmen.

DE 10 2006 040 084 A1 offenbart ein Paneel mit Trittschall- und mit Raumschall-Dämmung. Nach einer bevorzugten Ausführungsform ist das Paneel mit einer Dämpfungsschicht ausgestattet, die einen Kunststoff von bis zu 1000 kg/m³, bevorzugt von bis zu 800 kg/m³, insbesondere von bis zu 600 kg/m³, aufweist. Das Aufbringen der Dämmschicht(en) kann u. a. auch durch Schäumen erfolgen.

Ggf. wird weiterhin eine schallmindernde Beschichtung, eine sogenannte Dammmatte, aufgeklebt. Sie soll harten, plastisch wenig verformbaren Kunststoff (hartes EVA) und weichen, plastisch gut verformbaren Kunststoff (weiches EVA) umfassen.

Die Verwendung von Polyurethan-Schaumstoff mit der vorliegend geforderten Biegefestigkeit ist der DE 10 2006 040 084 A1 jedoch nicht zu entnehmen. CH 586 334 A5 offenbart mehrschichtige Fußbodenplatten mit einer kompakten Deckschicht und einer Isolierschicht aus Polyurethan-Hartintegralschaumstoff. Jedoch sind dieser Entgegenhaltung weder die Verwendung von Paneelen, umfassend einen Träger und eine mehrschichtige Verbundplatte, noch von Polyurethan-Schaumstoff mit der vorliegend geforderten Biegefestigkeit zu entnehmen.

US 5 352 510 A offenbart Schaumstoff-Dämmpaneelen, umfassend einen Polyurethan-Schaumstoff Träger und eine Deckschicht aus imprägniertem, zellulosehaltigem Material, wobei weitere Schichten, u.a. dekorative Schichten aufgebracht sein können.

In Anbetracht des Standes der Technik war es daher Aufgabe der vorliegenden Erfindung, Möglichkeiten zur Überwindung der beschriebenen Nachteile aufzuzeigen. So sollte insbesondere die Wasserbeständigkeit herkömmlicher Paneele verbessert werden. Gleichzeitig wurden Paneele mit einem möglichst geringen Gewicht und möglichst guten mechanischen Eigenschaften, insbesondere eine möglichst hohe Festigkeit und eine möglichst gute Abhebefestigkeit, sowie eine exzellente Bearbeitbarkeit, insbesondere für das Fräsen, gewünscht. Schließlich wurde eine möglichst einfache und möglichst kostengünstige Ausführungsform angestrebt.

Gelöst werden diese sowie weitere Aufgaben, die sich aus den zuvor diskutierten Zusammenhängen inhärent ergeben, durch ein Schaumstoff-Paneel mit allen Merkmalen des vorliegenden Anspruchs 1. Bevorzugte Abwandlungen des Paneels werden in den rückbezogenen Unteransprüchen beschrieben.

Durch die Bereitstellung eines Schaumstoff-Paneel, umfassend einen Träger und mindestens eine auf dem Träger haftende mehrschichtige Verbundplatte, wobei die mehrschichtige Verbundplatte
a) eine Kernschicht und
b) eine Dekorschicht umfasst,
wobei der Träger einen Polyurethan-Schaumstoff mit einer Biegefestigkeit nach DIN EN 12089 größer 2,0 MPa umfasst, gelingt es auf nicht naheliegende Art und Weise, ein Paneel für Bodenbeläge zugänglich zu machen, welches eine signifikant verbesserte Wasserbeständigkeit aufweist.

Weiterhin zeichnet es sich durch ein vergleichsweise geringes Gewicht aus, da die Dichte des verwendeten Trägermaterials deutlich kleiner als die von den üblicherweise eingesetzten Materialien, wie Spanplatten (700-800 kg/m³) und HDF (850-950 kg/m³), ist.

Zusätzlich weist das erfindungsgemäße Paneel hervorragende Materialeigenschaften, insbesondere sehr gute mechanische Eigenschaften, wie eine hohe Festigkeit und eine sehr gute Abhebefestigkeit, sowie eine exzellente Bearbeitbarkeit, insbesondere für Fräsen, auf.

Schließlich kann die Herstellung der erfindungsgemäßen Paneele auf einfache Art und Weise kostengünstig erfolgen. Dabei ist das Einbringen von Klick-Systemen entlang den Längsseiten der Paneele ohne Probleme möglich.

Das Schaumstoff-Paneel der vorliegenden Erfindung umfasst einen Träger und mindestens eine auf dem Träger haftende mehrschichtige Verbundplatte. Zweckmäßigerweise umfasst das erfindungsgemäße Paneel zwei auf dem Träger haftende mehrschichtige Verbundplatten, die vorzugsweise auf der Vorder- und der Rückseite des Trägers angebracht sind.

Für die Zwecke der vorliegenden Erfindung geeignete mehrschichtige Verbundplatten sind an sich bekannt und werden beispielsweise in der WO 2009/080171 beschrieben.

Sie enthalten in der Kernschicht vorzugsweise eine oder mehrere Bögen Kraftpapier. Das in diesem Zusammenhang bevorzugt verwendete Kraftpapier ist nach DIN 6730 ein Papier, das überwiegend aus Kraftzellstoff besteht, dem Kraftzellpapier zugesetzt sein kann, und das eine hohe Festigkeit, insbesondere eine hohe Zugfestigkeit, und eine hohe Beständigkeit aufweist. Kraftpapier wird üblicherweise wenigstens zu 90 % aus frischem, vorzugsweise ungebleichtem Sulfatzellstoff (Kraftzellstoff) hergestellt. Ferner kann Kraftpapier neben dem Zellstoff noch Stärke, Alaun und/oder Leim enthalten, um z. B. bestimmte Oberflächeneffekte und Festigkeitssteigerungen zu erzielen. Für die Zwecke der vorliegenden Erfindung hat sich Kraftpapier mit einer Grammatur von 150 g/m² bis 300 g/m², insbesondere 170 g/m² bis 250 g/m² als besonders vorteilhaft erwiesen. Ein bevorzugtes Kraftpapier ist Natron-Kraftpapier, das dem Fachmann auf dem Gebiet der HPL geläufig ist.

Die Anzahl der eingesetzten Kraftpapierbögen hängt im Wesentlichen von der gewünschten Dicke der Kernschicht bzw. der Verbundplatte ab. Vorzugsweise enthält die Verbundplatte ein bis acht Bögen, bevorzugter 3 bis 7 Bögen und insbesondere 4 bis 6 Bögen Kraftpapier.

Das Gewicht des verwendeten Kraftpapiers ist nicht weiter eingeschränkt. Es hängt insbesondere von der Anzahl der eingesetzten Kraftpapierbögen und somit von der gewünschten Dicke der Verbundplatte ab. Gemäß einer bevorzugten Ausführungsform liegt das Gewicht der verwendeten Kraftpapierbögen im Bereich von 125 g/m² bis 250 g/m², vorzugsweise 140 g/m² bis 230 g/m².

Gemäß einer bevorzugten Ausführungsform liegt die Enddicke der Verbundplatte im Bereich von 0,75 mm bis 0,85 mm, vorzugsweise bei 0,8 mm. In diesem Fall kann es bevorzugt sein, wenn 4 Kraftpapierbögen verwendet werden, die ein Gewicht von 125 g/m² bis 175 g/m², vorzugsweise 150 g/m² aufweisen. Andererseits können hierfür auch 3 Kraftpapierbögen eingesetzt werden, die ein Gewicht im Bereich von 200 g/m² bis 240 g/m² aufweisen.

Gemäß einer weiteren bevorzugten Ausführungsform liegt die Enddicke der Verbundplatte im Bereich von 0,95 mm bis 1,05 mm, vorzugsweise bei 1,0 mm. In diesem Fall kann es bevorzugt sein, wenn 5 Kraftpapierbögen verwendet werden, die ein Gewicht von 125 g/m² bis 175 g/m², vorzugsweise 150 g/m² aufweisen. Andererseits können hierfür auch 4 Kraftpapierbögen eingesetzt werden, die ein Gewicht im Bereich von 200 g/m² bis 240 g/m² aufweisen.

Gemäß noch einer ebenfalls weiteren bevorzugten Ausführungsform liegt die Enddicke der Verbundplatte im Bereich von 1,15 mm bis 1,25 mm, vorzugsweise bei 1,2 mm. In diesem Fall kann es bevorzugt sein, wenn 6 Kraftpapierbögen verwendet werden, die ein Gewicht von 125 g/m² bis 175 g/m², vorzugsweise 150 g/m² aufweisen. Andererseits können hierfür auch 5 Kraftpapierbögen eingesetzt werden, die ein Gewicht im Bereich von 200 g/m² bis 240 g/m² aufweisen.

Auf einer Seite der aus Kraftpapier gebildeten Kernschicht der mehrschichtigen Verbundplatte ist eine Dekorschicht aufgebracht, die einen Bogen Dekorpapier umfasst.

Durch diese Schicht aus Dekorpapier erhält die dekorative, mehrschichtige Verbundplatte und somit das erfindungsgemäße Paneel seine Optik. Demnach bezeichnet die Dekorschicht diejenige auf der Kernschicht aufgebrachte Schicht, deren Muster vom Betrachter visuell wahrgenommen werden kann.

Hierin verwendet bezieht sich Dekorpapier auf jedes Material, das für die Verbindung mit der darunter liegenden Kernschicht und gegebenenfalls der darüber liegenden Overlayschicht geeignet ist und ein Dekor wiedergeben kann. Das bevorzugte Material für das Dekorpapier ist Papier. Allerdings können auch gleichermaßen Folien, zum Beispiel Kunststofffolien, oder Furniere unter dem Begriff Dekorpapier erfasst sein. Furniere sind Holzblätter, die in der Regel eine Dicke von 0,1 mm bis 3 mm aufweisen und der Dekorschicht eine Holzoptik, z. B. eine bestimmte Maserung, verleihen können.

Üblicherweise wird das Dekor auf das Dekorpapier mittels eines Druckprozesses aufgebracht. So kann beispielsweise mittels fototechnischer Reproduktion ein beliebiges Motiv erstellt und im Tiefdruckverfahren auf das Dekorpapier aufgedruckt werden. Das Motiv kann zum Beispiel aus Holz-, Stein-, Keramik, Farb- und/oder Fantasiemustern bestehen. Ferner kann das Motiv aber auch durch Bestreichen des Dekorpapiers mit einer oder mehreren Farben erfolgen.

Das Flächengewicht des verwendeten Dekorpapiers ist nicht weiter eingeschränkt. Vorzugsweise liegt das Flächengewicht im Bereich von 40 g/m² bis 120 g/m², mehr bevorzugt im Bereich von 60 g/m² bis 100 g/m², insbesondere bei 70 g/m² bis 90 g/m².

Zwischen der Kernschicht und der Dekorschicht können gegebenenfalls weitere Schichten, wie zum Beispiel eine Underlayschicht, angeordnet sein. Diese Underlayschicht kann beispielsweise dazu dienen, den Verzug der Verbundplatte zu verhindern oder elektrostatische Aufladungen zu reduzieren. Vorzugsweise umfasst die Underlayschicht einen oder mehrere Bögen Kraftpapier.

Wenn die Verbundplatte eine Overlayschicht aufweist, dann bildet diese vorzugsweise die Deckschicht für die mehrschichtige Verbundplatte und ist auf der Dekorschicht aufgebracht. Die Overlayschicht umfasst einen oder mehrere Bögen eines vorzugsweise faserhaltigen Materials.

Das Flächengewicht der für die Overlayschicht verwendeten Bögen ist nicht weiter eingeschränkt. Es liegt vorzugsweise im Bereich von 12 g/m² bis 40 g/m², bevorzugter im Bereich von 20 g/m² bis 35 g/m² und noch mehr bevorzugt im Bereich von 25 g/m² bis 32 g/m².

Das Overlaymaterial weist vorzugsweise eine hohe Beständigkeit gegenüber chemischer, thermischer und mechanischer Beanspruchung auf. Wenn für die Herstellung des Overlays faserhaltiges Material verwendet wird, dann enthält dieses faserhaltige Material vorzugsweise gebleichte Zellstofffaser, insbesondere Zellulose, zum Beispiel α-Zellulose. Das Overlaymaterial ist vorzugsweise von einer Beschaffenheit, die es gewährleistet, dass das unter dem Overlay liegende Motiv der Dekorpapierschicht nach dem Verpressen zu dem dekorativen, mehrschichtigen Verbundwerkstoff sichtbar ist. Daher weist das Overlay bevorzugt einen hohen Grad an Transparenz auf.

Gemäß einer besonders bevorzugten Ausführungsform der vorliegenden Erfindung enthält die Verbundplatte Partikel mit einer Mohs-Härte von wenigstens 8, vorzugsweise wenigstens 8,5 und noch bevorzugter wenigstens 9.

Zweckmäßigerweise handelt es sich bei den Partikeln um Partikel aus Korund (Aluminiumoxid), Siliciumcarbid, Aluminiumborid, Borcarbid oder Mischungen davon. Besonders bevorzugt sind Korundpartikel, insbesondere Partikel aus Edelkorund. Die Korundpartikel können beispielsweise überwiegend scharfkantig oder kubisch sein und sind vorzugsweise überwiegend kubisch.

Die Partikel können auf dem Fachmann bekannte Weise oberflächenbehandelt sein. Zum Beispiel können die Partikel eine Beschichtung mit Silan-Verbindungen aufweisen. Vorzugsweise sind die Partikel jedoch unbeschichtet.

Die Partikel mit einer Mohs-Härte von wenigstens 8 weisen vorzugsweise eine bestimmte Korngrößenverteilung auf, die nach dem FEPA-Standard 42-2:2006 ermittelt wird. In diesem Standard sind unter anderem d3-Werte, d94-Werte und D50-Werte definiert, wobei der D50-Wert die mittlere Korngröße der Partikel angibt. Als mittlere Korngröße wird dabei die Korngröße bezeichnet, bei der 50 Prozent der Teilchen eine Korngröße kleiner und 50 Prozent der Teilchen eine Korngröße größer als die mittlere Korngröße haben.

Die mittlere Korngröße D50 der verwendeten Partikel mit einer Mohs-Härte von wenigstens 8 liegt vorteilhafterweise im Bereich von 5 µm bis 100 µm. Der maximale d3-Wert liegt vorzugsweise oberhalb der mittleren Korngröße der Partikel, zum Beispiel 1,4- bis 2,2-mal oberhalb der mittleren Korngröße der Partikel. Der Mindest-d94-Wert liegt vorzugsweise unterhalb der mittleren Korngröße der Partikel und beträgt zum Beispiel das 0,20- bis 0,68-fache der mittleren Korngröße der Partikel.

In diesem Zusammenhang ganz besonders geeignete Partikel werden in der WO 2009/080171 beschrieben.

Die vorstehend angegebenen Partikelgrößen sind insbesondere dann bevorzugt, wenn das erfindungsgemäße Paneel für Fußbodenanwendungen eingesetzt werden soll.

Die Verbundplatte des erfindungsgemäßen Paneels weist vorzugsweise eine Bindemittelanordnung auf, in der die Kernschicht und die Dekorschicht vorgesehen sind und die eine auf der Dekorschicht angeordnete Bindemittelschicht bildet, die vorteilhafterweise Partikel mit einer Mohs-Härte von wenigstens 8 enthält

Diese Bindemittelanordnung enthält bevorzugt wenigstens ein, vorzugsweise jedoch wenigstens zwei verschiedene Bindemittel im ausgehärteten Zustand. Durch dieses wenigstens eine ausgehärtete Bindemittel werden die einzelnen Bögen aus Kraftpapier untereinander und die aus den Kraftpapierbögen gebildete Kernschicht und die Dekorschicht miteinander verbunden. Die Dekorschicht wird vorzugsweise dabei auf der aus den Kraftpapierbögen gebildeten Kernschicht aufgebracht. Auf der Dekorschicht wiederum liegt vorzugsweise eine gehärtete Bindemittelschicht vor, die bevorzugt Partikel mit einer Mohs-Härte von wenigstens 8 enthält.

Gemäß einer bevorzugten Ausführungsform ist das Bindemittel, das im gehärteten Zustand die Kraftpapierbögen untereinander und die aus den Kraftpapierbögen aufgebaute Kernschicht mit der Dekorschicht verbindet, ein wärmehärtendes Harz. Bevorzugte Bindemittel sind flüssige oder verflüssigbare Harze, die für sich allein oder mit Reaktionsmitteln, zum Beispiel Härtern oder Beschleunigern, ohne Abspaltung flüchtiger Komponenten durch Polymerisation oder Polyaddition über Vernetzungsreaktionen zu Duroplasten aushärten. Als besonders bevorzugt haben sich hierfür Phenolharze erwiesen. Phenolharze sind nach DIN 16916, Teil 1 und ISO 10082 als Kondensationsprodukte von Phenolen und Aldehyden definiert. Unsubstituiertes Phenol und Formaldehyd sind die Hauptrohstoffe zur Herstellung von Phenolharzen. Zu Einzelheiten der Chemie der Phenolharze wird auf folgende Literatur verwiesen: A. Gardziella, L.A. Pilato, A. Knop, "Phenolic Resins", Springer Verlag, Berlin, Heidelberg, New York, Tokio, 1999; A. Gardziella, H.G. Haub, "Phenolharze" in: Kunststoff Handbuch, Band 10, "Duroplaste", S. 12-40, Carl Hanser Verlag, München, Wien, 1988; P. Adolphs, E. Giebeler, P. Stäglich, "Houben-Weyl, Methoden der Organischen Chemie", Band E20, Teil 3, S. 1974-1810, 4. Auflage, Georg Thieme Verlag, Stuttgart. Gemäß einer ganz besonders bevorzugten Ausführungsform wird als Binder für die Kraftpapierbögen Phenol-Formaldehyd-Harz verwendet.

Das Bindemittel, das im gehärteten Zustand die Dekorschicht mit der Kernschicht verbindet und die Bindemittelschicht bildet, die bevorzugt Partikel mit einer Mohs-Härte von wenigstens 8 enthält, ist vorzugsweise ebenfalls ein wärmehärtendes Harz. Für die Zwecke der vorliegenden Erfindung hat sich hierfür die Verwendung von Aminoplasten als vorteilhaft erwiesen. Aminoplaste sind Poykondensationsprodukte aus Carbonyl-Verbindungen, vorzugsweise Aldehyden, wie Formaldehyd, oder Ketonen, und NH-Gruppen enthaltenden Verbindungen, wie Harnstoff, Melamin, Urethane, Cyan- bzw. Cyandiamid, aromatische Amine und Sulfonamide, die in einer Art Mannich-Reaktion miteinander verknüpft werden und bei der Anwendung zu Duroplasten aushärten. Bevorzugte Aminoplasten sind Harnstoffharze, Melaminharze, Urethanharze, Cyan-, bzw. Cyandiamidharze, Anilinharze und Sulfonamidharze. Als besonders bevorzugt hat sich die Verwendung von Melamin-Formaldehyd-Harzen herausgestellt. Darunter sind härtbare Kondensationsprodukte aus Melamin und Formaldehyd zu verstehen. Ferner können auch Melamin-Harnstoff-FormaldehydHarze bevorzugt sein.

Gemäß einer weiteren Ausführungsform umfasst die Verbundplatte auch eine Overlayschicht, die auf der Dekorschicht angeordnet ist. In dieser Ausführungsform ist die Bindemittelschicht, die bevorzugt Partikel mit einer Mohs-Härte von wenigstens 8 enthält, nicht auf der Dekorschicht, sondern vorzugsweise auf der Overlayschicht gebildet. In diesem Fall ist es bevorzugt, wenn das Bindemittel, das im gehärteten Zustand die Overlayschicht mit der Dekorschicht verbindet und die Bindemittelschicht bildet, die bevorzugt Partikel mit einer Mohs-Härte von wenigstens 8 enthält, eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Harnstoff-Formaldehyd-Harz, ist. Dabei ist es bevorzugt, wenn für das Verbinden der Dekorschicht mit der Kernschicht, für das Verbinden der Overlayschicht mit der Dekorschicht und für das Bilden der Bindemittelschicht, die vorzugsweise Partikel mit einer Mohs-Härte von wenigstens 8 enthält, dasselbe Bindemittel, bevorzugt eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Harnstoff-Formaldehyd-Harz, verwendet wird.

Wenn zwischen der Kernschicht und der Dekorschicht eine Underlayschicht vorgesehen ist, dann ist das Bindemittel, das gegebenenfalls die Underlaybögen untereinander, die Kernschicht mit der Underlayschicht und die Underlayschicht mit der Dekorschicht verbindet, vorzugsweise eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Harnstoff-Formaldehyd-Harz.

Dem Fachmann ist klar, dass es insbesondere an den Grenzflächen einzelner Schichten, wie beispielsweise der Grenzfläche zwischen Kernschicht und Dekorschicht zu einem Vermischen der verwendeten Bindemittel kommen kann und die Grenzen zwischen den einzelnen Schichten zumeist nicht durch das verwendete Bindemittel, sondern vor allem durch die äußersten, die einzelnen Schichten bildenden Bögen definiert werden.

Die Beladung der Bindemittelschicht mit Partikeln mit einer Mohs-Härte von wenigstens 8 liegt, bezogen auf die Oberfläche der Verbundplatte, bevorzugt im Bereich von 21 g/m² bis 35 g/m², vorzugsweise im Bereich von 22 g/m² bis 32 g/m² und noch mehr bevorzugt im Bereich von 23 g/m² bis 29 g/m².

Die Verbundplatte wird vorzugsweise erhalten, indem man einen Aufbau herstellt, der Kraftpapierbögen, den Dekorpapierbogen und gegebenenfalls den Overlaybogen, sowie die Partikel und ein geeignetes Bindemittelsystem enthält, diesen Aufbau zwischen spezielle Pressplatten einbringt, verpresst und das Bindemittelsystem dabei aushärtet.

Unter Bindemittelsystem wird erfindungsgemäß ein einzelnes geeignetes Bindemittel oder eine Kombination von geeigneten Bindemitteln verstanden. Unter geeigneten Bindemitteln werden vorzugsweise diejenigen Bindemittel verstanden, die vorstehend als bevorzugt für das Verbinden der einzelnen in der Verbundplatte enthalten Schichten bzw. das Verbinden der die Schichten bildenden Bögen beschrieben worden sind.

Weitere Details zur Herstellung und zu den Eigenschaften von für die Zwecke der vorliegenden Erfindung besonders geeignete Verbundplatten können der WO 2009/080171 entnommen werden.

Die fertige Verbundplatte weist, je nach gewähltem Aufbau, unterschiedliche Dicken auf. Übliche Dicken liegen im Bereich von 0,5 mm bis 2 mm, vorzugsweise im Bereich von 0,6 mm bis 1,5 mm und besonders bevorzugt im Bereich von 0,8 mm bis 1,2 mm. Es ist allerdings auch möglich, Verbundplatten mit weitaus größeren Dicken, wie beispielsweise im Bereich von 2 mm bis 20 mm herzustellen.

Enthält die Verbundplatte eine Overlayschicht, dann liegt deren Dicke vorzugsweise im Bereich von 80 µm bis 120 µm, besonders bevorzugt im Bereich von 80 µm bis 110 µm. Als Dicke der Overlayschicht wird hierbei vorzugsweise der Abstand zwischen der der Dekorschicht abgewandten Außenseite der Bindemittelschicht und der Außenseite des mit der Overlayschicht in Kontakt stehenden Dekorpapierbogens verstanden. Die Dicke der Dekorschicht liegt vorzugsweise im Bereich von 65 µm bis 140 µm, besonders bevorzugt im Bereich von 65 µm bis 80 µm. Als Dicke der Dekorschicht wird hierbei vorzugsweise der Abstand zwischen der mit der Overlayschicht in Kontakt stehenden Außenseite des Dekorpapierbogens und der Außenseite des mit der Dekorschicht in Kontakt stehenden Kraftpapierbogens der Kernschicht verstanden. Die Dicke der Kernschicht kann je nach gewünschter Dicke der Verbundplatte stark variieren und liegt vorzugsweise im Bereich von 250 µm bis 1900 µm, besonders bevorzugt im Bereich von 500 µm bis 1500 µm.

Enthält die Verbundplatte keine Overlayschicht, dann liegt die Dicke der Dekorschicht ebenfalls vorzugsweise im Bereich von 65 µm bis 140 µm, besonders bevorzugt im Bereich von 80 µm bis 140 µm. Die Dicke der Dekorschicht bezeichnet in diesem Fall vorzugsweise den Abstand zwischen der der Kernschicht abgewandten Außenseite der Bindemittelschicht und der Außenseite des mit der Dekorschicht in Kontakt stehenden Kraftpapierbogens der Kernschicht. Die Dicke der Kernschicht kann unabhängig von der Gegenwart einer Overlayschicht beispielsweise im Bereich von 250 µm bis 1900 µm, besonders bevorzugt im Bereich von 500 µm bis 1500 µm, liegen.

Das Endgewicht der Verbundplatte ist von mehreren Faktoren, wie z. B. der Dicke der Verbundplatte, dem Gewicht der eingesetzten Komponenten und der Anzahl der verwendeten Bögen, abhängig. Vorzugsweise liegt das Gewicht der Verbundplatte im Bereich von 1,2 kg/m² bis 1,6 kg pro m² Oberfläche der Verbundplatte (kg/m²), besonders bevorzugt im Bereich von 1,3 kg/m² bis 1,5 kg/m², z. B. bei 1,4 kg/m².

Neben der Verbundplatte umfasst das erfindungsgemäße Paneel einen Polyurethan-Schaumstoff-Träger, insbesondere einen Polyurethan-Polyisocyanurat-Schaumstoff-Träger.

Polyurethane (PU, DIN-Kurzzeichen: PUR) sind Kunststoffe oder Kunstharze, welche aus der Polyadditionsreaktion von vorzugsweise kurzkettigen Diolen oder Polyolen mit Polyisocyanaten, wie z. B. Diphenylmethan-4,4'-diisocyanat (MDI), Diphenylmethan-2,4'-diisocyanat, 4,4'-Methylendicyclohexyldiisocyanat (HMDI), 2,4-Toluoldiisocyanat und/oder 2,6-Toluoldiisocyanat (TDI), entstehen. Die Verknüpfung erfolgt durch die Reaktion einer Isocyanatgruppe (-N=C=O) eines Moleküls mit einer Hydroxylgruppe (-OH) eines anderen Moleküls unter Bildung einer Urethangruppe (-NH-CO-O-). Dabei erfolgt keine Abspaltung von Nebenprodukten wie bei der Polykondensation.

Je nach Ausgangsstoffen können lineare oder vernetzte Polymere erhalten werden. Lineare Polyurethane können beispielsweise aus Diolen und Diisocyanaten erhalten werden. Durch Zugabe von weiterem Diisocyanat können lineare Polyurethane nachträglich vernetzt werden. Alternativ können vernetzte Polyurethane auch durch die Reaktion von Di- oder Triisocyanaten mit Polyolen hergestellt werden.

Das "Aufschäumen" des Polyurethans erfolgt üblicherweise in einer Nebenreaktion. Dabei reagiert Wasser mit einigen Isocyanatgruppen und setzt Kohlenstoffdioxid frei, das den noch weichen Kunststoff aufquellen lässt. Die gleichzeitig entstandene primäre Aminogruppe reagiert mit einer Isocyanatgruppe zu einem substituierten Harnstoff. Alternativ können auch niedrige siedende Lösungsmittel, wie z. B. Pentan oder Hexan, während der Polymerisation zugesetzt und später verdampft werden.

Polyisocyanurate (Kurzzeichen PIR) bezeichnen einen dem Polyurethan verwandten Kunststoff. Der Anteil der Polyisocyanate ist höher als bei PU. Weiterhin wird als Reaktionspartner ein Polyesterpolyol anstelle eines Polyetherpolyols verwendet. Als Strukturelement in PIR kommt die tautomere Isocyanursäure vor.

Bevorzugte Polyisocyanurate umfassen Gruppierungen der Formel (I) 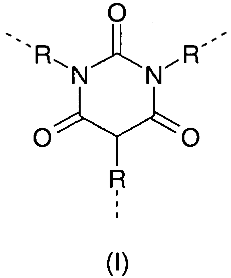 als charakterisches Grundelement der Makromoleküle, wobei die Reste R, jeweils unabhängig voneinander, für einen ggf. substituierten Kohlenstoff umfassenden Rest, bevorzugt für einen ggf. substituierten, aliphatischen, cycloaliphatischen oder aromatischen Rest, stehen. Sie sind vorzugsweise zugänglich durch Cyclotrimerisierung von Di- und Polyisocyanaten. Technisch wird hierzu bevorzugt das "polymere" PDMI der Struktur (II) verwendet, 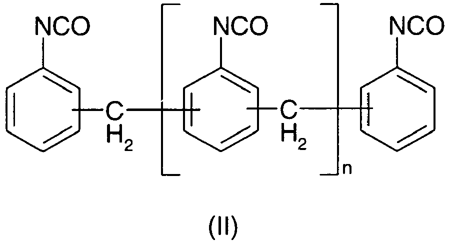 wobei n für eine Zahl größer gleich 1 steht.

Für weitere Details zu diesen Polymeren wird auf die gängige Fachliteratur, insbesondere auf Römpp-Lexikon Chemie, Hrsg. Jürgen Falbe; Manfred Regitz. Bearb. von Eckard Amelingmeier; Stuttgart, New York; Thieme; 10. Auflage, Band 5 PI-S; 1999, Stichworte "Polyurethane" und "Polyisocyanurate"; Encycl. Polym. Sei. Eng. 13, 243 - 303; Houben-Weyl, E 20/2, 1561 - 1721 und Ullmann, 4. Auflage, 15, 442 sowie die dort genannten Fundstellen, verwiesen.

Der erfindungsgemäße Träger kann weiterhin Füllstoffe umfassen. Besonders geeignet sind in diesem Zusammenhang Polymere, insbesondere Polyurethane, die günstigerweise fein gemahlen sind.

Das Gewicht des erfindungsgemäßen Trägers ist aufgrund der kleinen Dichte des Schaumstoffs vergleichsweise gering. Diese ist vorzugsweise kleiner 700 kg/m³ und liegt bevorzugt im Bereich von größer 500 kg/m³ bis kleiner 650 kg/m³, besonders bevorzugt im Bereich von größer 520 kg/m³ bis kleiner 600 kg/m³, insbesondere im Bereich von größer 540 kg/m³ bis kleiner 580 kg/m³. Diese Angabe bezieht sich, wie auch für alle anderen Größen, sofern nicht anders angegeben, auf Raumtemperatur (20°C).

Im Rahmen der vorliegenden Erfindung liegt der Schaumstoff-Träger vorzugsweise als Hartschaumstoff vor. Hartschaumstoffe bezeichnen gemäß DIN 7726 (05/1982) Schaumstoffe, die einer Verformung unter Druckbelastung einen relativ hohen Widerstand entgegensetzen. Die Druckspannung bei 10 % Stauchung bzw. Druckfestigkeit nach DIN 53421, 06/1984 ist bevorzugt mindestens 80 kPa.

Weiterhin weist der Schaumstoff zweckmäßigerweise eine geschlossenzellige Struktur auf, bei der die Wände zwischen den einzelnen Zellen sind komplett geschlossen sind.

Die Druckfestigkeit des Schaumstoffs nach DIN 826 liegt bevorzugt im Bereich von 5,5 MPa bis 7,5 MPa.

Die Biegefestigkeit des Schaumstoffs nach DIN EN 12089 ist erfindungsgemäß größer 2,0 MPa, zweckmäßigerweise größer 3,0 MPa, bevorzugt größer 4,0 MPa, geeigneterweise im Bereich von 3,0 MPa bis 10,0 MPa, insbesondere im Bereich von 5,0 MPa bis 7,0 MPa.

Die Scherfestigkeit des Schaumstoffs nach DIN EN 12090 liegt vorzugsweise im Bereich von 1 MPa bis 1,5 MPa.

Die Schubfestigkeit des Schaumstoffs nach DIN EN 12090 ist vorteilhafterweise im Bereich von 1 MPa bis 1,5 MPa.

Die Dickenquellen des Schaumstoffs nach DIN EN 68763 für 24 Stunden bei 20°C beträgt vorzugsweise weniger als 1 %.

Verfahren und Mittel zum festen Verbinden von Verbundplatte und Träger sind aus dem Stand der Technik bekannt. Beispielsweise kann das feste Verbinden von Verbundplatte und Träger durch Verkleben oder mit Hilfe von aus dem Stand der Technik bekannten Verbindungselementen erfolgen.

In diesem Zusammenhang besonders geeignete Kleber umfassen insbesondere Holzleime, d. h. Klebstoffe aus natürlichen oder synthetischen Grundstoffen, die zum Verbinden von Holz und Holzwerkstoffen verwendet werden. Hierzu gehören u. a. Glutinleime, Kaseinleime, Harnstoff-Formaldehydharzleime (auch Polykondensationsleime oder UF-Leime genannt), Phenol-Formaldehydharzleime (auch PF-Leime genannt), Resorzin-Formaldehydharzleime (auch RF-Leime genannt), Formaldehydarme Polykondensationsleime, Förmaldehydfreie Dispersionsleime (Weißleime) sowie PU-Leime. Ganz besonders vorteilhafte Ergebnisse werden mit sogenannten D4-Holzleimen (Einteilung gemäß DIN EN 204) erzielt, wobei bevorzugt Weißleime, d. h. formaldehydfreie Dispersionsleime, basierend auf Polyvinylacetat als Bindemittel, eingesetzt werden, die vorzugsweise einen Härter enthalten.

Das Verbinden der Verbundplatte mit dem Trägermaterial erfolgt vorzugsweise derart, dass die Oberfläche der Verbundplatte, die der Dekorschicht gegenüberliegt, mit einer Oberfläche des Trägers in Kontakt steht. Bevorzugt stehen daher in dem Paneel eine Oberfläche des Trägers und eine durch die Kernschicht der Verbundplatte gebildete Oberfläche in Kontakt.

Die Abhebefestigkeit der Verbundplatte von dem Träger nach DIN EN 311 beträgt vorzugsweise mindestens 0,8 N/mm², zweckmäßigerweise mindestens 1,0 N/mm², besonders bevorzugt mindestens 1,2 N/mm², insbesondere mindestens 1,3 N/mm².

Das Paneel kann zudem weitere aus dem Stand der Technik bekannte Funktionsmaterialien aufweisen. Beispielhaft seien Materialien zum Flammschutz, zur Abschirmung von Strahlung, zur Schalldämpfung, zur Stabilisierung und zur Feuchtigkeitssperre genannt. Bevorzugte Funktionsmaterialien umfassen einen Gegenzug und/oder eine Trittschalldämpfung, wie sie bevorzugt bei Bodenplatten verwendet werden.

Die Dicke des Paneels ist nicht weiter eingeschränkt. Sie liegt vorzugsweise im Bereich von 11 mm bis 51 mm, günstigerweise im Bereich von 13 mm bis 39 mm, bevorzugt im Bereich von 16 mm bis 24 mm, besonders bevorzugt im Bereich von 17 mm bis 23 mm und ganz besonders bevorzugt im Bereich von 18 mm bis 22 mm. Die Dicke der in dem Paneel vorhandenen Verbundplatte kann, wie vorstehend beschrieben, vorzugsweise im Bereich von 0,5 mm bis 2,0 mm, besonders bevorzugt im Bereich von 0,6 mm bis 1,5 mm und ganz besonders bevorzugt im Bereich von 0,8 mm bis 1,2 mm liegen. Die Dicke des Trägers liegt vorzugsweise im Bereich von 10 mm bis 50 mm, bevorzugt im Bereich von 12 mm bis 38 mm, zweckmäßigerweise im Bereich von 15 mm bis 23 mm, besonders bevorzugt im Bereich von 16 mm bis 22 mm, ganz besonders bevorzugt im Bereich von 17 mm bis 21 mm. Der gegebenenfalls vorgesehene Gegenzug und/oder die Trittschalldämpfung weisen vorzugsweise eine Dicke im Bereich von 0,5 mm bis 3 mm, besonders bevorzugt im Bereich von 1 mm bis 2 mm auf.

Das Endgewicht des Paneels ist nicht besonders eingeschränkt. Es liegt vorzugsweise im Bereich von 10 kg/m² bis 16 kg pro m² Oberfläche des Paneels (kg/m²), besonders bevorzugt im Bereich von 11 kg/m² bis 15 kg/m² und ganz besonders bevorzugt im Bereich von 12 kg/m² bis 14 kg/m².

Das erfindungsgemäße Paneel lässt sich auf für den Fachmann selbstverständliche Weise verarbeiten. Ist das Paneel eine Bodenplatte oder ein Wandpaneel, dann kann diese(s) mit einer Nut- und Feder-Struktur versehen werden, um das flächenmäßige Verbinden einer Vielzahl solcher Bodenplatten oder Wandpaneele zur Herstellung von brettartigen oder fliesenartiges Strukturen zu ermöglichen.

Bevorzugt wird eine Verbindung von mehreren Paneelen durch Anwinkeln oder Neigen der Paneele, wobei die vorzugsweise formschlüssige Verbindung der Paneele zweckmäßigerweise durch horizontale Bewegung der Platten nicht lösbar ist. Besonders bevorzugt werden "Neige-Verriegelungssysteme", insbesondere solche, die ein vertikales Abklappen der Paneele erlauben.

"Anwinkeln" bzw. "Neigen" bezeichnet in diesem Zusammenhang eine Verbindung, die durch eine Drehbewegung hergestellt wird, in deren Verlauf eine Änderung des Winkels zwischen zwei Teilen stattfindet, die verbunden oder getrennt werden. Wenn sich "Neigen" auf die Verbindung von zwei Bodenplatten bezieht, findet die Winkelbewegung so statt, dass die oberen Teile von Verbindungskanten wenigstens während eines Teils der Bewegung wenigstens teilweise in Kontakt miteinander sind.

Der Begriff "Neige-Verriegelungssystem" bezeichnet ein mechanisches Verriegelungssystem, das durch Neigen vertikal und horizontal verbunden werden könnte und eine Feder sowie eine Nut, die zwei benachbarte Kanten in einer vertikalen Richtung verriegelt, und einen Verriegelungsstreifen mit einem Verriegelungselement an einer Kante einer Platte umfasst, die als "Leistenplatte" bzw. "Streifen-Platte" bezeichnet wird und mit einer Verriegelungsnut an einer anderen Kante einer Platte zusammenwirkt, die als "Nutplatte" bezeichnet wird und die Kanten in einer horizontalen Richtung verriegelt. Das Verriegelungselement und die Verriegelungsnut haben im Allgemeinen abgerundete Führungsflächen, die das Verriegelungselement in die Verriegelungsnut hinein führen, sowie Verriegelungsflächen, die Verriegelung bewirken und horizontale Trennung der Kanten verhindern.

Vertikales Abklappen ist keine reine Kombination beispielsweise aus einem Neigungs-Verriegelungssystem an langen Kanten und einem vertikalen Verriegelungssystem an kurzen Kanten, da die vertikal gerichteten und die Neigevorgänge kombiniert werden und die kurzen Kanten wie eine Schere zusammengeklappt werden. Das Verriegeln findet allmählich von einem Kantenabschnitt an eine lange Kante angrenzend, der geneigt wird, zu dem anderen Kantenabschnitt an die andere gegenüberliegende lange Kante angrenzend statt. Ein derartiges Verriegeln von zwei aneinander grenzenden Kanten wird als ein "Abklapp-Verriegeln" bezeichnet.

"Vertikales Abklappen" ist ein Verriegeln von drei Platten, bei dem eine Kombination aus Neigen an langen Kanten und Abklappen an kurzen Kanten verwendet wird. "Vertikales Abklappen entlang der vertikalen Ebene" bezeichnet ein vertikales Abklappen, wobei die oberen Ränder von zwei kurzen Kanten im Wesentlichen während des gesamten Abklappvorgangs in Kontakt sind, bis die Kanten aneinander verriegelt sind.

Vor diesem Hintergrund ist es besonders vorteilhaft, wenn mindestens eine Längsseite des Paneels, bevorzugt mindestens zwei Längsseiten des Paneels, insbesondere alle Längsseiten des Paneels, ein Klick-System aufweisen, um das Paneel mit einem oder mehreren weiteren Paneelen formschlüssig verbinden zu können, insbesondere durch "Anwinkeln" oder "Neigen" der Paneele. Ein Verleimen der Paneele an den Verbindungsstellen ist dabei vorzugsweise nicht erforderlich, vor dem Hintergrund einer einfachen Lösbarkeit der Verbindung zu einem späteren Zeitpunkt sogar nicht gewünscht.

Günstigerweise ist das Klick-System als eine Nut-Feder (tongue in groove) Verbindung ausgebildet, die eine Verriegelung in vertikaler Richtung senkrecht zur Ebene der verbundenen Paneele bewirken kann. Vorzugsweise sind darüber hinaus weitere Verriegelungselemente vorgesehen, durch welche auch eine Verriegelung in horizontaler Richtung senkrecht zu den verbundenen Kanten und in der Ebene der verbundenen Paneele erreicht werden kann. Verriegelungselemente dieser Art ermöglichen es, dass zwischen den Paneelen eine Verbindung in vertikaler Richtung senkrecht zur Ebene der verbundenen Paneele sowie in horizontaler Richtung senkrecht zu den verbundenen Kanten und in der Ebene der verbundenen Paneele erhalten wird, so wie dies beispielsweise aus der WO 97/47834 bekannt ist.

Besonders zweckmäßig sind in diesem Zusammenhang Winkelsysteme, wie z. B. das Woodloc-System, bei welchen die Paneele in eine CNC-gefräste Form von oben eingewinkelt werden können. Weitere Details zu solchen Klick-Systemen, insbesondere dem Woodloc-System können der Fachliteratur, insbesondere der WO 2008/004960 entnommen werden. Die in dieser Druckschrift beschriebenen Varianten und bevorzugten Ausführungsformen sind auch im Rahmen der vorliegenden Erfindung besonders bevorzugt.

Weiterhin sind sogenannte "Fold-Down"-Systeme besonders vorteilhaft, bei denen die Paneele vorzugsweise mit speziellen Nut-Federsystemen versehen werden, wie sie z. B. in den deutschen Gebrauchsmustern DE 20 2007 018 802 U1 und DE 20 2007 018 804 U1 sowie der Patentanmeldung WO 2007/008139 A1 beschrieben werden.

Im Rahmen einer ersten besonders bevorzugten Ausführungsform der vorliegenden Erfindung bilden die erfindungsgemäßen Paneele einen Satz aus Bodenplatten mit allen Merkmalen des Anspruchs 1 des Gebrauchsmusters DE 20 2007 018 802 U1. Die in dieser Druckschrift beschriebenen Varianten und bevorzugten Ausführungsformen sind auch im Rahmen der vorliegenden Erfindung besonders bevorzugt.

Im Rahmen einer zweiten besonders bevorzugten Ausführungsform der vorliegenden Erfindung bilden die erfindungsgemäßen Paneele einen Satz aus Bodenplatten mit allen Merkmalen des Anspruchs 1 des Gebrauchsmusters DE 20 2007 018 804 U1. Die in dieser Druckschrift beschriebenen Varianten und bevorzugten Ausführungsformen sind auch im Rahmen der vorliegenden Erfindung besonders bevorzugt.

Im Rahmen einer dritten besonders bevorzugten Ausführungsform der vorliegenden Erfindung umfasst das erfindungsgemäße Paneel ein Klick-System (joint) mit allen Merkmalen des Anspruchs 1 der Patentanmeldung WO 2007/008139. Die in dieser Druckschrift beschriebenen Varianten und bevorzugten Ausführungsformen sind auch im Rahmen der vorliegenden Erfindung besonders bevorzugt.

## Patentansprüche

1. Schaumstoff-Paneel, umfassend einen Träger und mindestens eine auf dem Träger haftende Deckschicht, wobei der Träger einen Schaumstoff aus Polyurethan umfasst,
**dadurch gekennzeichnet, dass**
- die Deckschicht eine mehrschichtige Verbundplatte umfasst, wobei die mehrschichtige Verbundplatte
a) eine Kernschicht und
b) eine Dekorschicht umfasst, und
- der Polyurethan-Schaumstoff eine Biegefestigkeit nach DIN EN 12089 größer 2,0 MPa aufweist.

2. Schaumstoff-Paneel nach Anspruch 1, **dadurch gekennzeichnet, dass** die Dicke des Trägers im Bereich von 10 mm bis 50 mm liegt.

3. Schaumstoff-Paneel nach Anspruch 1 oder 2, **dadurch gekennzeichnet, dass** der Polyurethan-Schaumstoff eine Dichte im Bereich von größer 500 kg/m³ bis kleiner 650 kg/m³ aufweist.

4. Schaumstoff-Paneel nach mindestens einem der vorangehenden Ansprüche, **dadurch gekennzeichnet, dass** der Träger einen Polyurethan-Polyisocyanurat-Schaumstoff umfasst.

5. Schaumstoff-Paneel nach mindestens einem der vorangehenden Ansprüche, **dadurch gekennzeichnet, dass** der Schaumstoff eine geschlossenzellige Struktur besitzt.

6. Schaumstoff-Paneel nach mindestens einem der vorangehenden Ansprüche, **dadurch gekennzeichnet, dass** der Schaumstoff eine Druckfestigkeit nach DIN 826 im Bereich von 5,5 MPa bis 7,5 MPa aufweist.

7. Schaumstoff-Paneel nach mindestens einem der vorangehenden Ansprüche, **dadurch gekennzeichnet, dass** der Schaumstoff eine Biegefestigkeit nach DIN EN 12089 im Bereich von 5 MPa bis 7 MPa aufweist.

8. Schaumstoff-Paneel nach mindestens einem der vorangehenden Ansprüche, **dadurch gekennzeichnet, dass** der Schaumstoff eine Scherfestigkeit nach DIN EN 12090 im Bereich von 1 MPa bis 1,5 MPa aufweist.

9. Schaumstoff-Paneel nach mindestens einem der vorangehenden Ansprüche, **dadurch gekennzeichnet, dass** der Schaumstoff eine Schubfestigkeit nach DIN EN 12090 im Bereich von 1 MPa bis 1,5 MPa aufweist.

10. Schaumstoff-Paneel nach mindestens einem der vorangehenden Ansprüche, **dadurch gekennzeichnet, dass** der Schaumstoff eine Dickenquellen nach DIN EN 68763 für 24 Stunden bei 20°C von kleiner 1 % aufweist.

11. Schaumstoff-Paneel nach mindestens einem der vorangehenden Ansprüche, **dadurch gekennzeichnet, dass** der Träger und die Verbundplatte mit einem Holzleim verklebt sind.

12. Schaumstoff-Paneel nach Anspruch 11, **dadurch gekennzeichnet, dass** der Träger und die Verbundplatte gemäß DIN EN 204 mit einem D4-Holzleim verklebt sind.

13. Schaumstoff-Paneel nach Anspruch 12, **dadurch gekennzeichnet, dass** der Träger und die Verbundplatte mit einem Polyvinylacetat-Dispersionsleim verklebt sind.

14. Schaumstoff-Paneel nach mindestens einem der vorangehenden Ansprüche, **dadurch gekennzeichnet, dass** die Abhebefestigkeit der Verbundplatte von dem Träger nach DIN EN 311 mindestens 0,8 N/mm² beträgt.

15. Schaumstoff-Paneel nach mindestens einem der vorangehenden Ansprüche, **dadurch gekennzeichnet, dass** mindestens eine Längsseite des Paneels ein Klick-System aufweist, um das Paneel mit einem weiteren Paneel formschlüssig zu verbinden.

## Claims

1. A foam panel comprising a support and at least one cover layer adhering to the support, wherein the support comprises a foam formed from polyurethane,
**characterized in that**
- the cover layer comprises a multilayer composite board, wherein the multilayer composite board comprises
a) a core layer and
b) a decorative layer, and
- the polyurethane foam has a bending strength in accordance with DIN EN 12089 of more than 2.0 MPa.

2. The foam panel as claimed in claim 1, **characterized in that** the thickness of the support is in the range from 10 mm to 50 mm.

3. The foam panel as claimed in claim 1 or claim 2, **characterized in that** the polyurethane foam has a density in the range from more than 500 kg/m³ to less than 650 kg/m³.

4. The foam panel as claimed in at least one of the preceding claims, **characterized in that** the support comprises a polyurethane-polyisocyanurate foam.

5. The foam panel as claimed in at least one of the preceding claims, **characterized in that** the foam has a closed-cell structure.

6. The foam panel as claimed in at least one of the preceding claims, **characterized in that** the foam has a compressive strength in accordance with DIN 826 in the range from 5.5 MPa to 7.5 MPa.

7. The foam panel as claimed in at least one of the preceding claims, **characterized in that** the foam has a bending strength in accordance with DIN EN 12089 in the range from 5 MPa to 7 MPa.

8. The foam panel as claimed in at least one of the preceding claims, **characterized in that** the foam has a transverse strength in accordance with DIN EN 12090 in the range from 1 MPa to 1.5 MPa.

9. The foam panel as claimed in at least one of the preceding claims, **characterized in that** the foam has a shear strength in accordance with DIN EN 12090 in the range from 1 MPa to 1.5 MPa.

10. The foam panel as claimed in at least one of the preceding claims, **characterized in that** the foam has a thickness swell in accordance with DIN EN 68763 for 24 hours at 20°C of less than 1%.

11. The foam panel as claimed in at least one of the preceding claims, **characterized in that** the support and the composite board are bonded with a wood glue.

12. The foam panel as claimed in claim 11, **characterized in that** the support and the composite board are bonded with a D4 wood glue in accordance with DIN EN 204.

13. The foam panel as claimed in claim 12, **characterized in that** the support and the composite board are bonded with a polyvinyl acetate dispersion glue.

14. The foam panel as claimed in at least one of the preceding claims, **characterized in that** the delamination strength, in accordance with DIN EN 311, of the composite board from the support is at least 0.8 N/mm².

15. The foam panel as claimed in at least one of the preceding claims, **characterized in that** at least one longitudinal side of the panel is provided with a click system in order to connect the panel with a further panel in an interlocking manner.

## Revendications

1. Panneau de mousse synthétique comprenant un support et au moins une couche protectrice adhérant sur le support, le support comprenant une mousse en polyuréthane synthétique,
**caractérisé en ce que**
- la couche protectrice comprend une plaque composite multicouches, la plaque composite multicouches comportant
a) une couche centrale et
b) une couche décorative, et
- la mousse en polyuréthane synthétique fait preuve d'une résistance à la flexion selon la norme DIN EN 12089 qui est supérieure à 2,0 MPa.

2. Panneau de mousse synthétique selon la revendication 1, **caractérisé en ce que** l'épaisseur du support se situe dans l'ordre de 10 mm à 50 mm.

3. Panneau de mousse synthétique selon la revendication 1 ou 2, **caractérisé en ce que** la mousse en polyuréthane synthétique fait preuve d'une densité de l'ordre de plus de 500 kg/m³ à moins de 650 kg/m³.

4. Panneau de mousse synthétique selon au moins l'une quelconque des revendications précédentes, **caractérisé en ce que** le support comprend une mousse synthétique polyuréthane et polyisocyanurate.

5. Panneau de mousse synthétique selon au moins l'une quelconque des revendications précédentes, **caractérisé en ce que** la mousse synthétique présente une structure à alvéoles fermées.

6. Panneau de mousse synthétique selon au moins l'une quelconque des revendications précédentes, **caractérisé en ce que** la mousse synthétique fait preuve d'une résistance à la pression selon la norme DIN 826 de l'ordre de 5,5 MPa à 7,5 MPa.

7. Panneau de mousse synthétique selon au moins l'une quelconque des revendications précédentes, **caractérisé en ce que** la mousse synthétique fait preuve d'une résistance à la flexion selon la norme DIN EN 12089 de l'ordre de 5 MPa à 7 MPa.

8. Panneau de mousse synthétique selon au moins l'une quelconque des revendications précédentes, **caractérisé en ce que** la mousse synthétique fait preuve d'une résistance au cisaillement selon la norme DIN EN 12090 de l'ordre de 1 MPa à 1,5 MPa.

9. Panneau de mousse synthétique selon au moins l'une quelconque des revendications précédentes, **caractérisé en ce que** la mousse synthétique fait preuve d'une résistance à la poussée selon la norme DIN EN 12090 de l'ordre de 1 MPa à 1,5 MPa.

10. Panneau de mousse synthétique selon au moins l'une quelconque des revendications précédentes, **caractérisé en ce que** la mousse synthétique fait preuve d'un gonflement selon la norme DIN EN 68763 sur 24 heures à 20°C de moins de 1 % t.

11. Panneau de mousse synthétique selon au moins l'une quelconque des revendications précédentes, **caractérisé en ce que** le support et la plaque composite sont collés avec une colle à bois.

12. Panneau de mousse synthétique selon la revendication 11, **caractérisé en ce que** le support et la plaque composite sont collés selon la norme DIN EN 204 avec une colle à bois D4.

13. Panneau de mousse synthétique selon la revendication 12, **caractérisé en ce que** le support et la plaque composite sont collés avec une colle de dispersion à l'acétate polyvinylique.

14. Panneau de mousse synthétique selon au moins l'une quelconque des revendications précédentes, **caractérisé en ce que** la résistance au décollage de la plaque composite du support selon la norme DIN EN 311 est d'au moins 0,8 N/mm².

15. Panneau de mousse synthétique selon au moins l'une quelconque des revendications précédentes, **caractérisé en ce qu'**au moins un côté longitudinal du panneau comporte un système d'encliquetage, pour assembler par complémentarité de forme le panneau avec un autre panneau.
